# EUROPEAN PATENT SPECIFICATION

(11) **EP 4 385 784 B1**
(45) Date of publication and mention of the grant of the patent: **11.06.2025**
(21) Application number: 22214390.1
(22) Date of filing: 16.12.2022
(51) Int. Cl.: B60K 15/05

(54) **CHARGE PORT DOOR ASSEMBLY FOR AN ELECTRICALLY PROPELLED VEHICLE**
LADEANSCHLUSSTÜRANORDNUNG FÜR EIN ELEKTRISCH ANGETRIEBENES FAHRZEUG
ENSEMBLE PORTE D'ORIFICE DE CHARGE POUR VÉHICULE À PROPULSION ÉLECTRIQUE

(43) Date of publication of application: 19.06.2024
(73) Proprietor: MINEBEA ACCESSSOLUTIONS ITALIA S.P.A., 10044 Pianezza (IT)
(72) Inventor: FRATTINI, Massimo, 10044 PIANEZZA (IT); GRAMAGLIA, Alberto, 10044 PIANEZZA (IT)
(74) Representative: Germain Maureau

(56) References cited:
- EP-A1- 4 026 974
- DE-A1- 102019 100 787
- DE-U1- 202016 105 735
- US-B2- 10 259 315

## Description

### Field of the invention

The present invention relates generally to vehicles and, more particularly, to the charge port of an electric vehicle or of a plug-in hybrid electric vehicle.

### Background of the invention

Electric vehicles and hybrid electric vehicles often have an electric charge port for charging an electric battery with an external power source. The charge port is typically externally mounted, thereby allowing easy access as well as the possibility to lock the passenger compartment while the vehicle is being charged. A charge port door, or charge port flap, usually covers the charge port and must be opened to access the charge port to charge the battery.

The opening and closing of the charge port door may be fully automated by the means of a mechanism assembly comprising one or more electric actuators. The mechanism is configured to transform the movement of the actuator by means of different linkages, among which arms or levers. The kinematic of the actuation mechanism may be configured to multiply the movement generated by the actuator. When an intense load is applied on the charge port door, for instance by an ill-intentioned person, the load exerted on the door is, due to the kinematic of the mechanism, multiplied towards the actuator. Therefore an intense load exerted on the charge port door can break the actuator. Such a situation must of course being avoided as much as possible. Examples of charging ports are disclosed in prior art documents DE 10 2019 100787 A1, EP 4 026 974 A1, US 10 259 315 B2 and DE 20 2016 105735 U1.

### Summary of the invention

An object of the invention is to provide a charge port door assembly equipped with an actuation system for automatically opening and/or closing the charge port door, the actuation system being configured to safe the actuator when a high intensity load is exerted on the door, for example in case of a break-in attempt.

To this end, the invention relates to a charge port door assembly for a vehicle, comprising:
- a charge port door;
- an actuation system, configured to move the charge port door between a closed position, in which the door is intended to cover a charge port of a vehicle and to remain flush with an outer surface of the vehicle, and an open position, in which the door is intended to permit access to the charge port, the actuation system comprising a linkage connecting the door to a support intended to be fixed relative to the vehicle, and an actuator configured to actuate the linkage to move the door,
   the actuation system further comprising at least an actuation arm, the actuation arm being connected, at a first end, by the means of an actuation lever assembly, to an output member of the actuator, and being directly or indirectly connected at an opposite, second end to the door, the output member being movable between a first position corresponding to the closed position of the door and a second position corresponding to the open position of the door,
the actuation lever assembly comprising an actuation lever and an elastic biasing device, the actuation lever being rotatably coupled at a first end to the output member of the actuator and being rotatably coupled at a second end to the actuation arm, the actuation lever being moveable relative to the output member between an engagement position and an extended position, the elastic biasing device being configured to bias the actuation lever towards the engagement position.

Thus, the charge port door assembly is protected against breakage and damage of the actuation system: thanks to the actuation lever assembly, the actuation system is able to withstand the loads that are transmitted to the actuation system when a very intense force is exerted on the door, for example during a break-in attempt. In such a case, the actuation lever moves to an extended configuration, thereby letting the door move from its closed position towards its open position without inducing excessive loads on the actuation system, and in particular on the actuator. The actuation lever assembly according to the invention therefore provides a safety feature that prevents breakage of the actuation system, and in particular of the actuator, in case a very intense force is exerted in the door, for example during a break-in attempt.

The charge port door assembly may comprise the following features, considered either alone or in any technically possible combination:

When the output member is in the first position and the actuation lever is in the engagement position, the door is in the closed position, and when the output member is in the first position and the actuation lever is in the extended position, the door is in the open position.

When the actuation lever is in the engagement position, a blocking part of the output member bears on a bearing part of the actuation lever.

The elastic biasing device is configured to allow the actuation lever moving from the engagement position when the actuation lever is subjected to a load which is higher than a specified load.

The specified load is lower than a load likely to damage the actuation system, and in particular the actuator.

The specified load is higher than a maximum load to which the actuation lever is subjected during normal operation of the actuation system.

The elastic biasing device is a spring, for example a coil torsion spring.

The spring rate of the spring is such that the actuation lever reaches the extended position when the actuation lever is subjected to a load, the value of which is lower than the value of a load likely to damage the actuation system, and in particular the actuator.

The elastic biasing device is a coil torsion spring positioned around a cylindrical portion of the output member, in such a way that the spring biases the blocking part and the bearing part towards each other.

The actuator is an electric rotary actuator.

The linkage includes a first lever and a second lever, each of the first and second levers being hinged, at one end, to the support and being hinged, at an opposite end, to the door, the first and second levers being configured as a parallelogram mechanism.

The actuation system includes a mechanical actuation device, the mechanical actuation device comprising a mechanical link, such as a Bowden cable or a rod, connected to the actuation lever.

The invention also relates to a vehicle comprising a charge port mounted on a support and a charge port door assembly as disclosed above.

### Brief description of the drawings

Figure 1 illustrates a vehicle equipped with a charge port door assembly according to the invention, the door being closed.
Figure 2 illustrates a charge port door assembly according to the invention, the door being in the closed position.
Figure 3 illustrates the charge port door assembly of Figure 2, the door being in the open position.
Figure 4 is a detailed view of the actuation lever assembly of Figure 2.
Figure 5 illustrates the actuation lever assembly of Figure 4, the components of which are disassembled.
Figure 6 illustrates the functioning of the actuation lever assembly of Figure 4.
Figure 7 is a detailed view showing the functioning of the actuation lever assembly.
Figure 8 illustrates the mechanical actuating device of the door assembly.

### Detailed description of embodiments

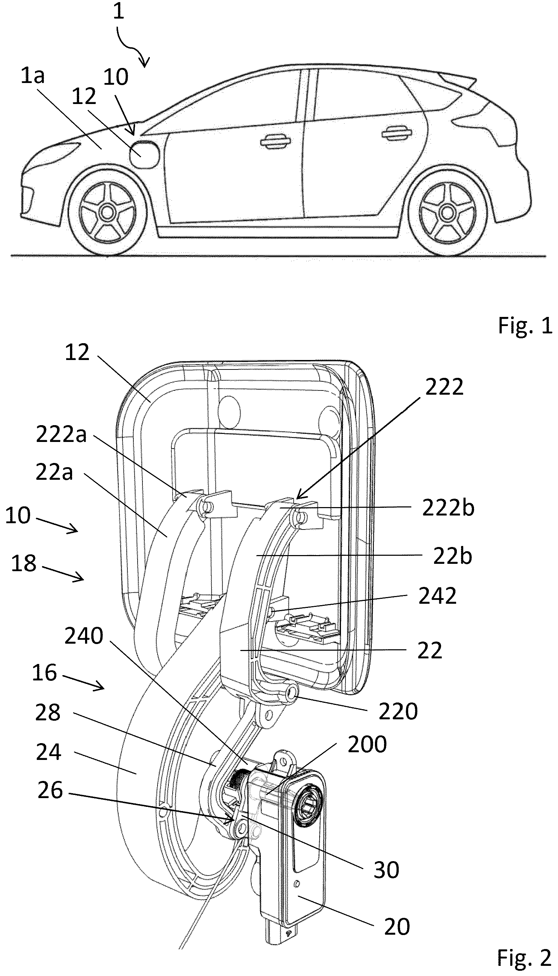

Figure 1 illustrates a vehicle 1 having at least one electric propulsion motor, such as an electric vehicle or a plug-in hybrid electric vehicle. The vehicle is equipped with a charge port (not shown) configured to be connected to a charge plug when the car needs to be charged. The vehicle 1 is also equipped with a charge port door assembly 10 according to the invention, in order to cover and protect the charge port when the latter is not in use.

Figure 2 to 8 illustrate an embodiment of a charge port door assembly according to the invention.

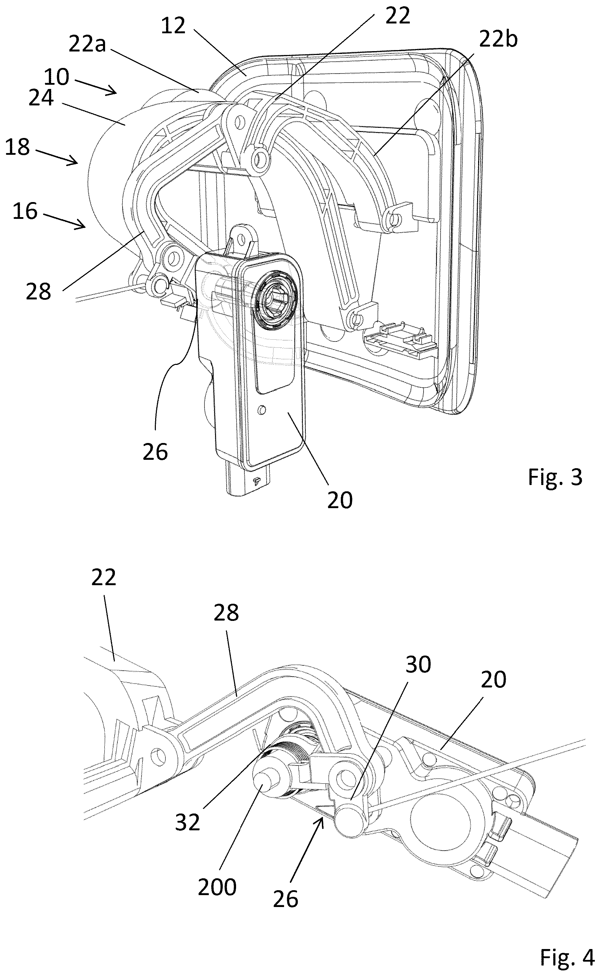

The charge port door assembly 10 comprises a door 12 moveable between a closed position (shown in Figures 1 and 2), in which the door blocks access to the charge port, and an open position (shown in Figure 3), in which the door permits access to the charge port.

The charge port door assembly 10 is mounted onto a charge port support (not shown) which is fixed relative to the vehicle 1. In its closed position, the door 12 is flush with an outer surface of an exterior panel 1a of the vehicle 1, for example a front fender 1a as shown in Figure 1. In its open position, the door 12 uncovers an opening in the panel 1a, thereby allowing access to the charge port.

The door 12 is attached to the support by means of an actuation system 16. The actuation system 16 is configured for automatically moving the door from its closed position to its open position and inversely. To this end, the actuation system 16 includes a linkage 18 and an actuator 20. The actuator 20 is fixed relative to the support of the charge port and is for example an electric rotary actuator.

The linkage 18 connects the door 12 to the support. The linkage 18 includes a lever parallelogram. More particularly, the linkage 18 includes a first lever 22 and a second lever 24. The first lever 22 is hinged at one end 220 to the support and is hinged at an opposite end 222 to the door 12. In the embodiment of Figures 2 and 3, the first lever 22 comprises two connecting arms 22a, 22b, each of the connecting arms having an end 222a, 222b hinged to the door 12. The second lever 24 is hinged at one end 240 to the support and is hinged at an opposite end 242 to the door 12. The first lever 22 and the second lever 24 are thus configured as a parallelogram mechanism (or parallelogram four-bar linkage), which allows maintaining a constant orientation of the door 12 during its motion. It will however being understood that the actuation system could be configured to achieve a different kind of movement for the door without departing from the scope of the invention.

The linkage 18 comprises an actuation lever assembly 26 which is connected to a rotating output shaft 200 of the actuator 20, and an actuation arm 28 which is connected to the first lever 22. The actuation lever assembly 26 includes an actuation lever 30 which is connected, via a releasable rotational connection, to the output shaft 200 at a first end 300 and is rotatably coupled to the actuation arm 28 at an opposite, second end 302. The actuation arm 28 is rotatably coupled, at a first end 280, to the actuation lever 30 and is rotatably coupled, at an opposite, second end 282, to the first lever 22. The actuation arm 28 is connected to the first lever 22 at a pivot point, which is distinct of the pivot point between the first lever 22 and the support. The linkage 18 is thus configured to transmit, during normal actuation of the charge port door assembly, the rotational movement of the output shaft 200 of the actuator 20 to the first lever 22, via the actuation lever 30 and the actuation arm 28.

According to the invention, the connection between the actuation lever 30 of the actuation lever assembly 26 and the output shaft 200 is a releasable rotational connection. In particular, the rotational connection is released if the torque exerted by the actuation lever 30 on the output shaft 200 exceeds a specified value. To this end, the actuation lever 30 can rotate relative to the output shaft 200 between an engagement position and an extended position, and the actuation lever assembly 26 includes an elastic biasing device 32, such as a torsion spring 32, configured to bias the actuation lever 30 towards the engagement position.

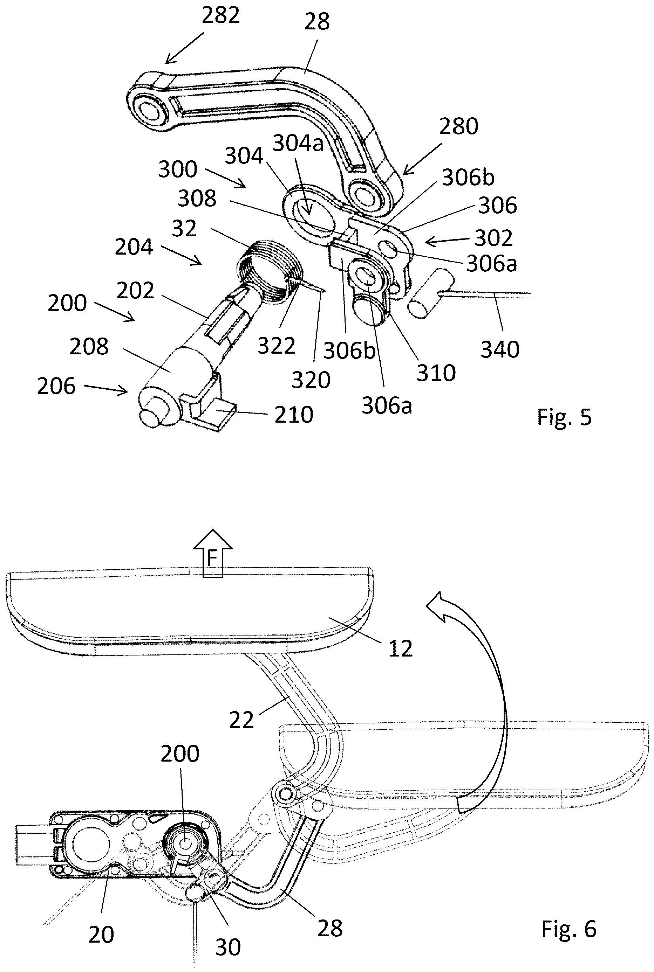

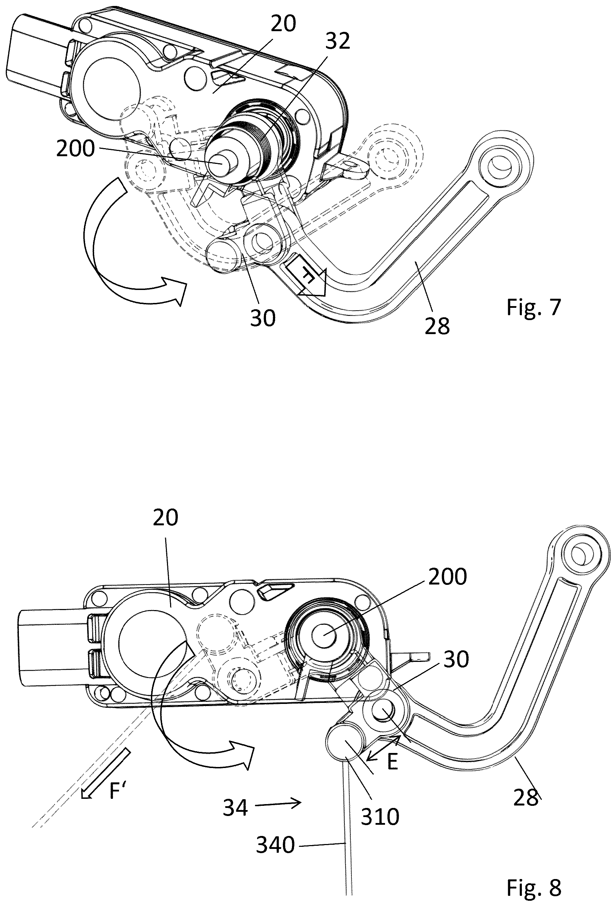

As the actuation lever 30 is biased by the elastic biasing device 32, the actuation lever 30 may rotate relative to the output shaft 200, from its engagement position to its extended position (or to any intermediate position), only if the actuation lever 30 is subjected to a load opposite and higher than the load exerted by the spring 32. In such a case, as shown in Figures 6 and 7, the rotation of the actuation lever 30 will result in the displacement of the actuation arm 28 and therefore of the first lever 22, in particular when a high intensity force is exerted on the door 12 and the actuator 20 is not energized. In an embodiment, the actuation lever assembly 30 is configured to allow the door 12 moving from its closed position to its open position without involving any movement of the output shaft 200, thereby preventing any damage to the actuator 20. More particularly, the actuation lever assembly 26 is configured to let the actuation lever 30 rotate relative to the output shaft 200 upon application of a pulling force F on the door 12, the pulling force F inducing on the actuation lever assembly a load having an intensity higher than a specified intensity, in particular when the actuator 20 is not energized. Of course, the actuation lever assembly 26 is configured not to let the actuation lever 30 rotate when it is subjected only to loads generated during normal actuation of the charge port door assembly. This is achieved thanks to the tuning of the value of the spring rate of the elastic biasing device 34. In particular, the spring rate value is such that the elastic biasing device will allow the actuation lever 30 moving from the engagement position when subjected to a load lower than a load likely to damage or break the actuator 20. The actuation lever assembly 30 according to the invention therefore provides a safety feature that prevents breaking of the actuation system, and in particular of the actuator 20, in case a very intense force is exerted in the door 12, for example during a break-in attempt.

The actuation lever assembly 26 is shown more in detail in Figure 5. As mentioned above, the actuation lever 30 is connected to the output shaft 200 at a first end 300 and is connected to the actuation arm 28 at an opposite, second end 302. At its first end 300, the actuation lever 30 comprises a first connecting part 304 having a circular opening 304a configured to be positioned around the output shaft 200. At its second end 302, the actuation lever 30 comprises a second connecting part 306 having at least one circular opening 306a configured to be connected to the actuation arm 28, for example by means of an axle (not shown). As shown in Figure 5, the connecting part may have two openings 306a, each opening being part of a respective wall 306b, the two walls being spaced so that the first end 280 of the actuation arm 28 can be located within the space delimited by the two walls 306b. It will be understood that the distance between the center of the circular opening 304a of the first connecting part 304 and the center of the circular opening(s) 306a of the second connecting part 306 will be not null, so as to provide a lever arm allowing the actuation arm 28 to exert a torque on the actuation lever 30 when a pulling force F is exerted on the door 12.

The circular opening 304a of the first connecting part 304 is positioned around a cylindrical portion 202 of the output shaft 200. The cylindrical portion 202 is located between a first connecting part 204 and a second connecting part 206 of the output shaft 200. The first connecting part 204 is configured to be connected to an output connecting part (not shown) of the actuator 20. The second connecting part 206 has a cylindrical portion 208 which is configured to be received within the elastic biasing device 32, which is a coil torsion spring 32, the latter being arranged around the cylindrical portion 208. The second connecting part 206 has a blocking part 210 protruding, for example along a radial direction, from the cylindrical portion 208. The blocking part 210 is configured to bear, when the actuation lever 30 is in the engagement position, on a corresponding bearing part 308 provided on the actuation lever 30 (for example at a bottom end of the wall(s) 306b, thereby preventing relative rotation of the actuation lever 30 and the output shaft 200. The blocking part 210 is, at least partially along an axial direction, spaced from the outer surface of the cylindrical portion 208, thereby allowing a portion of the spring 32 to be positioned between the blocking part 210 and the cylindrical portion 208. A first end 320 of the spring 32 bears against the blocking part 210 whereas an opposite, second end 322 of the spring 32 bears against the bearing part 308 of the actuation lever 30, thereby allowing the spring 32 to bias the bearing part 308 and the blocking part 310 towards each other, that is, biasing the actuation lever 30 towards its engagement position.

Figures 8 illustrates an embodiment of a charge port door assembly 10 according to the invention, wherein there is provided a mechanical actuation device 34 for opening or closing the door 12 in case the actuation system 16 is not functioning, for example in case of failure of the actuator 20. The mechanical actuation device 34 includes a mechanical link 340, such as a Bowden cable or a rod, connected to a connecting part 310 provided on the actuation lever 30. The connecting part 310 is configured in such a way that the connecting point with the mechanical link 340 is positioned at a distance E from the pivot point between the actuation lever 30 and the output shaft 200, thereby providing a lever arm allowing rotation of the actuation lever 30 when exerting a pulling force F' on the mechanical link 340. When exerting a pulling force F' on the mechanical link 340, the actuation lever 30 will rotate and lead the movement of the actuation arm 28 to a first position (shown in dotted lines, corresponding to the closed position of the door 12) to a second position (shown in solid lines, corresponding to the open position of the door 12). The mechanical actuation 34 thus allows opening the door 12 without involving any load on the actuator 20 in case of failure of the actuation system (for example when the vehicle's battery is discharged).

## Claims

1. A charge port door assembly (10) for a vehicle (1), comprising :
- a charge port door (12);
- an actuation system (16), configured to move the charge port door (12) between a closed position, in which the door (12) is intended to cover a charge port of a vehicle (1) and to remain flush with an outer surface of the vehicle (1), and an open position, in which the door (12) is intended to permit access to the charge port, the actuation system (16) comprising a linkage (18) connecting the door (12) to a support intended to be fixed relative to the vehicle (1), and an actuator (20) configured to actuate the linkage (18) to move the door (12),
the actuation system (16) further comprising at least an actuation arm (28), the actuation arm (28) being connected, at a first end (280), by the means of an actuation lever assembly (26), to an output member (200) of the actuator (20), and being directly or indirectly connected at an opposite, second end (282) to the door (12), the output member (200) being movable between a first position corresponding to the closed position of the door (12) and a second position corresponding to the open position of the door (12),
**characterized in that**
the actuation lever assembly (26) comprising an actuation lever (30) and an elastic biasing device (32), the actuation lever (30) being rotatably coupled at a first end (300) to the output member (200) of the actuator (20) and being rotatably coupled at a second end (302) to the actuation arm (28), the actuation lever (30) being moveable relative to the output member (200) between an engagement position and an extended position, the elastic biasing device (32) being configured to bias the actuation lever (30) towards the engagement position.

2. The charge port door assembly (10) according to claim 1, wherein:
- when the output member (200) is in the first position and the actuation lever (30) is in the engagement position, the door (12) is in the closed position,
- when the output member (200) is in the first position and the actuation lever (30) is in the extended position, the door (12) is in the open position.

3. The charge port door assembly (10) according to claim 1 or 2, wherein, when the actuation lever (30) is in the engagement position, a blocking part (210) of the output member (200) bears on a bearing part (308) of the actuation lever (30).

4. The charge port door assembly (10) according to any of claims 1 to 3, wherein the elastic biasing device (32) is configured to allow the actuation lever (30) moving from the engagement position when the actuation lever (30) is subjected to a load which is higher than a specified load.

5. The charge port door assembly (10) according to claim 4, wherein the specified load is lower than a load likely to damage the actuation system (16), and in particular the actuator (20).

6. The charge port door assembly (10) according to claim 4 or claim 5, wherein the specified load is higher than a maximum load to which the actuation lever (30) is subjected during normal operation of the actuation system (16).

7. The charge port door assembly (10) according to anyone of claims 1 to 6, wherein the elastic biasing device (32) is a spring, for example a coil torsion spring (32).

8. The charge port door assembly (10) according to claim 7, wherein the spring rate of the spring (32) is such that the actuation lever (30) reaches the extended position when the actuation lever (30) is subjected to a load, the value of which is lower than the value of a load likely to damage the actuation system (16), and in particular the actuator (20).

9. The charge port assembly (10) according to anyone of claims 3 to 8, wherein the elastic biasing device (32) is a coil torsion spring positioned around a cylindrical portion (208) of the output member (200), in such a way that the spring (32) biases the blocking part (210) and the bearing part (308) towards each other.

10. The charge port door assembly (10) according to anyone of the preceding claims, wherein the actuator (20) is an electric rotary actuator.

11. The charge port door assembly (10) according to anyone of the preceding claims, wherein the linkage (18) includes a first lever (22) and a second lever (24), each of the first and second levers (22, 24) being hinged at one end (220, 240) to the support and being hinged at an opposite end (222, 242) to the door (12), the first and second levers (22, 24) being configured as a parallelogram mechanism.

12. The charge port door assembly according to anyone of the preceding claims, wherein the actuation system includes a mechanical actuation device (34), the mechanical actuation device (34) comprising a mechanical link (340), such as a Bowden cable or a rod, connected to the actuation lever (30).

13. A vehicle (1) comprising a charge port mounted on a support and a charge port door assembly (10) according to anyone of the preceding claims.

## Patentansprüche

1. Ladeanschlussklappenanordnung (10) für ein Fahrzeug (1), umfassend:
- eine Ladeanschlussklappe (12),
- ein Betätigungssystem (16), das konfiguriert ist, um die Ladeanschlussklappe (12) zwischen einer geschlossenen Position, in der die Klappe (12) dazu bestimmt ist, einen Ladeanschluss eines Fahrzeugs (1) abzudecken und bündig mit einer Außenoberfläche des Fahrzeugs (1) zu bleiben, und einer geöffneten Position, in der die Klappe (12) dazu bestimmt ist, den Zugang zum Ladeanschluss zu ermöglichen, zu bewegen, wobei das Betätigungssystem (16) eine Verlinkung (18), umfasst, welche die Klappe (12) mit einem Träger verbindet, der dazu bestimmt ist, in Bezug zum Fahrzeug (1) fixiert zu sein, und ein Betätigungsglied (20), das konfiguriert ist, um die Verlinkung (18) zu betätigen, um die Klappe (12) zu bewegen
wobei das Betätigungssystem (16) weiter mindestens einen Betätigungsarm (28) umfasst, wobei der Betätigungsarm (28) an einem ersten Ende (280) anhand einer Betätigungshebelanordnung (26) mit einem Ausgangselement (200) des Betätigungsglieds (20) verbunden ist und an einem gegenüberliegenden zweiten Ende (282) direkt oder indirekt mit der Klappe (12) verbunden ist, wobei das Ausgangselement (200) zwischen einer ersten Position, die der geschlossenen Position der Klappe (12) entspricht, und einer zweiten Position, die der geöffneten Position der Klappe (12) entspricht, beweglich ist,
**dadurch gekennzeichnet, dass**
die Betätigungshebelanordnung (26) einen Betätigungshebel (30) und eine elastische Vorspannvorrichtung (32) umfasst, wobei der Betätigungshebel (30) an einem ersten Ende (300) drehbar mit dem Ausgangselement (200) des Betätigungsglieds (20) gekoppelt ist und an einem zweiten Ende (302) drehbar mit dem Betätigungsarm (28) gekoppelt ist, wobei der Betätigungshebel (30) in Bezug zum Ausgangselement (200) zwischen einer Eingriffsposition und einer ausgezogenen Position beweglich ist, wobei die elastische Vorspannvorrichtung (32) konfiguriert ist, um den Betätigungshebel (30) in Richtung der Eingriffsposition vorzuspannen.

2. Ladeanschlussklappenanordnung (10) nach Anspruch 1, wobei:
- wenn sich das Ausgangselement (200) in der ersten Position befindet und sich der Betätigungshebel (30) in der Eingriffsposition befindet, sich die Klappe (12) in der geschlossenen Position befindet,
- wenn sich das Ausgangselement (200) in der ersten Position befindet und der Betätigungshebel (30) sich in der ausgezogenen Position befindet, sich die Klappe (12) in der geöffneten Position befindet.

3. Ladeanschlussklappenanordnung (10) nach Anspruch 1 oder 2, wobei, wenn sich der Betätigungshebel (30) in der Eingriffsposition befindet, ein Blockierteil (210) des Ausgangselements (200) an einem Lagerteil (308) des Betätigungshebels (30) anliegt.

4. Ladeanschlussklappenanordnung (10) nach einem der Ansprüche 1 bis 3, wobei die elastische Vorspannvorrichtung (32) konfiguriert ist, um es dem Betätigungshebel (30) zu erlauben, sich aus der Eingriffsposition zu bewegen, wenn der Betätigungshebel (30) einer Last ausgesetzt ist, die größer als eine festgelegte Last ist.

5. Ladeanschlussklappenanordnung (10) nach Anspruch 4, wobei die festgelegte Last geringer ist als eine Last, die das Betätigungssystem (16), und insbesondere das Betätigungsglied (20) beschädigen könnte.

6. Ladeanschlussklappenanordnung (10) nach Anspruch 4 oder Anspruch 5, wobei die festgelegte Last größer ist als eine maximale Last, welcher der Betätigungshebel (30) während eines normalen Betriebs des Betätigungssystems (16) ausgesetzt ist.

7. Ladeanschlussklappenanordnung (10) nach einem der Ansprüche 1 bis 6, wobei die elastische Vorspannvorrichtung (32) eine Feder, wie beispielsweise eine Spiraltorsionsfeder (32), ist.

8. Ladeanschlussklappenanordnung (10) nach Anspruch 7, wobei die Federkonstante der Feder (32) derart ist, sodass der Betätigungshebel (30) die ausgezogene Position erreicht, wenn der Betätigungshebel (30) einer Last ausgesetzt wird, deren Wert geringer ist als der Wert einer Last, die das Betätigungssystem (16), und insbesondere das Betätigungsglied (20), beschädigen könnte.

9. Ladeanschlussanordnung (10) nach einem der Ansprüche 3 bis 8, wobei die elastische Vorspannvorrichtung (32) eine Spiraltorsionsfeder ist, die um einen zylindrischen Abschnitt (208) des Ausgangselements (200) herum positioniert ist, sodass die Feder (32) das Blockierteil (210) und das Lagerteil (308) in Richtung zueinander vorspannt.

10. Ladeanschlussklappenanordnung (10) nach einem der vorstehenden Ansprüche, wobei das Betätigungsglied (20) ein elektrisches Drehbetätigungsglied ist.

11. Ladeanschlussklappenanordnung (10) nach einem der vorstehenden Ansprüche, wobei die Verlinkung (18) einen ersten Hebel (22) und einen zweiten Hebel (24) beinhaltet, wobei jeder von dem ersten und zweiten Hebel (22, 24) an einem Ende (220, 240) an dem Träger angelenkt ist und an einem gegenüberliegenden Ende (222, 242) an der Klappe (12) angelenkt ist, wobei der erste und zweite Hebel (22, 24) als Parallelogrammmechanismus konfiguriert sind.

12. Ladeanschlussklappenanordnung nach einem der vorstehenden Ansprüche, wobei das Betätigungssystem eine mechanische Betätigungsvorrichtung (34) beinhaltet, wobei die mechanische Betätigungsvorrichtung (34) eine mechanische Verlinkung (340), wie zum Beispiel einen Bowdenzug oder eine Stange, umfasst, die mit dem Betätigungshebel (30) verbunden ist.

13. Fahrzeug (1), das einen Ladeanschluss, der auf einem Träger montiert ist, und eine Ladeanschlussklappenanordnung (10) nach einem der vorstehenden Ansprüche umfasst.

## Revendications

1. Ensemble trappe de prise de recharge (10) pour un véhicule (1), comprenant :
- une trappe de prise de recharge (12) ;
- un système d'actionnement (16), configuré pour déplacer la trappe de prise de recharge (12) entre une position fermée, dans laquelle la trappe (12) est destinée à couvrir une prise de recharge d'un véhicule (1) et à rester au même niveau que la surface extérieure du véhicule (1), et une position ouverte, dans laquelle la trappe (12) est destinée à permettre l'accès à la prise de recharge, le système d'actionnement (16) comprenant une tringlerie (18) reliant la trappe (12) à un support destiné à être fixe par rapport au véhicule (1), et un actionneur (20) configuré pour actionner la tringlerie (18) afin de déplacer la trappe (12),
le système d'actionnement (16) comprenant en outre au moins un bras d'actionnement (28), le bras d'actionnement (28) étant relié, au niveau d'une première extrémité (280), au moyen d'un ensemble de levier d'actionnement (26), à un élément de sortie (200) de l'actionneur (20), et étant relié directement ou indirectement, au niveau d'une seconde extrémité opposée (282) à la trappe (12), l'élément de sortie (200) étant mobile entre une première position correspondant à la position fermée de la trappe (12) et une seconde position correspondant à la position ouverte de la trappe (12),
**caractérisé en ce que**
l'ensemble de levier d'actionnement (26) comprenant un levier d'actionnement (30) et un dispositif de sollicitation élastique (32), le levier d'actionnement (30) étant couplé en rotation au niveau d'une première extrémité (300) à l'élément de sortie (200) de l'actionneur (20) et étant couplé en rotation au niveau d'une seconde extrémité (302) au bras d'actionnement (28), le levier d'actionnement (30) étant mobile par rapport à l'élément de sortie (200) entre une position d'engagement et une position étendue, le dispositif de sollicitation élastique (32) étant configuré pour solliciter le levier d'actionnement (30) vers la position d'engagement.

2. Ensemble trappe de prise de recharge (10) selon la revendication 1, dans lequel :
- lorsque l'élément de sortie (200) est dans la première position et que le levier d'actionnement (30) est dans la position d'engagement, la trappe (12) est dans la position fermée ;
- lorsque l'élément de sortie (200) est dans la première position et que le levier d'actionnement (30) est dans la position étendue, la trappe (12) est dans la position ouverte.

3. Ensemble trappe de prise de recharge (10) selon la revendication 1 ou 2, dans lequel, lorsque le levier d'actionnement (30) est dans la position d'engagement, une partie de blocage (210) de l'élément de sortie (200) s'appuie sur une partie d'appui (308) du levier d'actionnement (30).

4. Ensemble trappe de prise de recharge (10) selon l'une des revendications 1 à 3, dans lequel le dispositif de sollicitation élastique (32) est configuré pour permettre au levier d'actionnement (30) de se déplacer de la position d'engagement lorsque le levier d'actionnement (30) est soumis à une charge qui est supérieure à une charge spécifiée.

5. Ensemble trappe de prise de recharge (10) selon la revendication 4, dans lequel la charge spécifiée est inférieure à une charge susceptible d'endommager le système d'actionnement (16), et en particulier l'actionneur (20).

6. Ensemble trappe de prise de recharge (10) selon la revendication 4 ou 5, dans lequel la charge spécifiée est supérieure à une charge maximale à laquelle le levier d'actionnement (30) est soumis pendant le fonctionnement normal du système d'actionnement (16).

7. Ensemble trappe de prise de recharge (10) selon l'une quelconque des revendications 1 à 6, dans lequel le dispositif de sollicitation élastique (32) est un ressort, par exemple un ressort de torsion hélicoïdal (32).

8. Ensemble trappe de prise de recharge (10) selon la revendication 7, dans lequel la raideur du ressort (32) est telle que le levier d'actionnement (30) atteint la position étendue lorsque le levier d'actionnement (30) est soumis à une charge dont la valeur est inférieure à la valeur d'une charge susceptible d'endommager le système d'actionnement (16), et en particulier l'actionneur (20).

9. Ensemble prise de recharge (10) selon l'une quelconque des revendications 3 à 8, dans lequel le dispositif de sollicitation élastique (32) est un ressort de torsion hélicoïdal positionné autour d'une partie cylindrique (208) de l'élément de sortie (200), de sorte que le ressort (32) sollicite la partie de blocage (210) et la partie d'appui (308) l'une vers l'autre.

10. Ensemble trappe de prise de recharge (10) selon l'une quelconque des revendications précédentes, dans lequel l'actionneur (20) est un actionneur rotatif électrique.

11. Ensemble trappe de prise de recharge (10) selon l'une quelconque des revendications précédentes, dans lequel la tringlerie (18) comprend un premier levier (22) et un second levier (24), chacun des premier et second leviers (22, 24) étant articulé au niveau d'une extrémité (220, 240) au support et étant articulé au niveau d'une extrémité opposée (222, 242) à la trappe (12), les premier et second leviers (22, 24) étant configurés comme un mécanisme à parallélogramme.

12. Ensemble trappe de prise de recharge selon l'une quelconque des revendications précédentes, dans lequel le système d'actionnement comprend un dispositif d'actionnement mécanique (34), le dispositif d'actionnement mécanique (34) comprenant une liaison mécanique (340), telle qu'un câble Bowden ou une tige, reliée au levier d'actionnement (30).

13. Véhicule (1) comprenant une prise de recharge montée sur un support et un ensemble trappe de prise de recharge (10) selon l'une quelconque des revendications précédentes.
